# EUROPÄISCHE PATENTSCHRIFT

(11) **EP 1 403 572 B1**
(45) Veröffentlichungstag und Bekanntmachung des Hinweises auf die Patenterteilung: **15.02.2006**
(21) Anmeldenummer: 03014983.5
(22) Anmeldetag: 02.07.2003
(51) Int. Cl.: F16J 15/08

(54) **Mehrlagige Zylinderkopfdichtung**
Multi-layered cylinder head gasket
Joint de culasse à couches multiples

(30) Priorität: 26.09.2002 DE 10244853
(43) Veröffentlichungstag der Anmeldung: 31.03.2004
(73) Patentinhaber: Federal-Mogul Sealing Systems GmbH, 57562 Herdorf (DE)
(72) Erfinder: Stapel, Klaus, Dipl.-Ing., 57072 Siegen (DE); Retiere, Alan, 44300 Nantes (FR)

(56) Entgegenhaltungen:
- EP-A- 0 939 256
- EP-A- 1 122 470
- WO-A-01/96768
- FR-A- 2 032 044
- US-A- 5 277 433
- US-A- 5 970 612

## Beschreibung

Die Erfindung betrifft eine mehrlagige Zylinderkopfdichtung mit einer Distanzlage, die der Anzahl von Zylinderlaufbuchsen aufnehmenden Brennkammern einer Verbrennungskraftmaschine entsprechende Öffnungen aufweist, wobei die Distanzlage mit mehreren, vorgebbare Abstände sowohl zur jeweiligen Öffnung als auch zum Randbereich aufweisenden, mit Sicken versehen Funktionslagen in Wirkverbindung steht.

Die EP-A- 1122470 offenbart eine mehrlagige Zylinderkopfdichtung mit einer Distanzlage und mit Sicken ausgebildeten Funktionslagen. Die Distanzlage weist am Brennraumrand einen aus Weicheisen gebildeten Verpressungbegrenzer für die Sicken auf. Eine Brennraumeinfassung ist aus dieser Schrift nicht zu entnehmen.

Aus der FR-A- 2032044 ist eine einlagige Metalldichtung zu entnehmen bei der die Brennraumabdichtung über einen gesicketen Metallring erfolgt und die Abdichtung der Flüssigkeitsöffnungen über Elastomerkörper. Die Metalldichtung weist keine gesickten Funktionslagen auf.

Der DE-A 199 51 530 ist eine mehrlagige Zylinderkopfdichtung mit Öffnungen entsprechend einer Anzahl von Brennkammern einer Brennkraftmaschine und mit einer zu einer Öffnung hin angeordneten Brennraumeinfassung zu entnehmen, wobei die Brennraumeinfassung zumindest eine Funktionslage der Zylinderkopfdichtung umfaßt und innerhalb der Brennraumeinfassung eine Vollsicke der Funktionslage angeordnet ist. Die Zylinderkopfdichtung weist eine Auflage auf, die von der Brennraumeinfassung getrennt angeordnet ist, wobei die Auflage mit der Zylinderkopfdichtung losgelöst von der Brennraumeinfassung mit zumindest einer anderen Lage der Zylinderkopfdichtung verbunden ist.

Der JP- U 59-1850 ist eine Zylinderkopfdichtung zu entnehmen, die unter anderem auch im Bereich einer brennraumseitig vorgesehenen Zylinderlaufbuchse eine Brennraumeinfassung beinhaltet.

In ähnlicher Weise beschreibt die JP- U 59-64453 eine mehrlagige Zylinderkopfdichtung, die brennraumseitig ebenfalls mit einer Brennraumeinfassung versehen ist.

Bei Verbrennungsmotoren mit toleranzbedingt unterschiedlich hohen Buchsenüberständen können die herkömmlich eingesetzten mehrlagigen Stahl-Zylinderkopfdichtungen, welche eine Vollsicke zur dynamischen Gasabdichtung aufweisen, nicht immer eingesetzt werden. Die Vollsicken sind auch bei Erhöhung der Anzahl von Funktionslagen nicht in der Lage, die zum Teil sehr großen Toleranzen von Buchse zu Buchse auszugleichen, um eine ausreichende Linienpresse zur Gasabdichtung aufzubauen. Weiterhin kann es durch die hohen Buchsenüberstandstoleranzen zur Verbiegungen und Deformationen der Funktionslage kommen, was einen negativen Einfluß auf die Gas- und Medienabdichtung mit sich bringt, bzw. auch zu Rissen und Brüchen in der Lage führt.

Ebenfalls allgemein bekannt sind Stahl-Elastomer-Zylinderkopfdichtungen, mit einer Brennraumeinfassung zur Gasabdichtung und mit Elastomerraupen zur Medienabdichtung. Hier können aber je nach Betriebszustand des Motors (Temperatur-, Schiebebewegungen-, Bauteilausdehnungen) Beschädigungen an der Elastomerraupe auftreten. Elastomerraupen sind in der Regel sehr anfällig gegen äußere Einflüsse.

Der Erfindung liegt die Aufgabe zugrunde, für Brennkraftmaschinen mit toleranzbedingt unterschiedlich großen Überständen der Zylinderlaufbuchsen eine Zylinderkopfdichtung bereitzustellen, die auch für diese Brennkraftmaschinen eine sichere Gasabdichtung gewährleistet, gleichzeitig jedoch eine gute Öl- und Kühlmittelabdichtung der Sicken mit sich bringt.

Diese Aufgabe wird erfindungsgemäß durch die Merkmale des Patentanspruch 1 gelöst.

Vorteilhafte Weiterbildungen des Erfindungsgegenstandes sind den Unteransprüchen zu entnehmen.

Mit dem Erfindungsgegenstand ist es nun möglich, auch Brennkraftmaschinen mit von der Höhe unterschiedliche Überstände aufweisenden Zylinderlaufbuchsen gasseitig gut und dauerhaft abzudichten. Die Brennraumeinfassung wird mit dem Weicheisenring um die Distanzlage herum gebördelt. Hierbei wird ein auf den Motor abgestimmter Spalt eingestellt. Dadurch kann sich die Brennraumeinfassung frei bewegen und ist von der Distanzlage mit den darauf vorgesehenen Funktionslagen entkoppelt. Die Funktionslagen mit den Halbsicken sind mit der Distanzlage fest verbunden. Die Kraftbalance wird durch die entsprechende Anzahl der mit Halbsicken versehenen Funktionslagen und die Dicke der Begrenzungselemente (Limiter), welche an den Außenkanten der Zylinderkopfdichtung angebracht sind, eingestellt. Die benötigte Kraftbalance wird hierbei von den jeweiligen Buchsenüberstandstoleranzen vorgegeben.

Der Erfindungsgegenstand ist anhand eines Ausführungsbeispieles in der Zeichnung dargestellt und wird wie folgt beschrieben. Es zeigen:
- Figur 1: Prinzipskizze einer Zylinderkopfdichtung
- Figur 2: Querschnitt durch die Zylinderkopfdichtung gemäß Figur 1

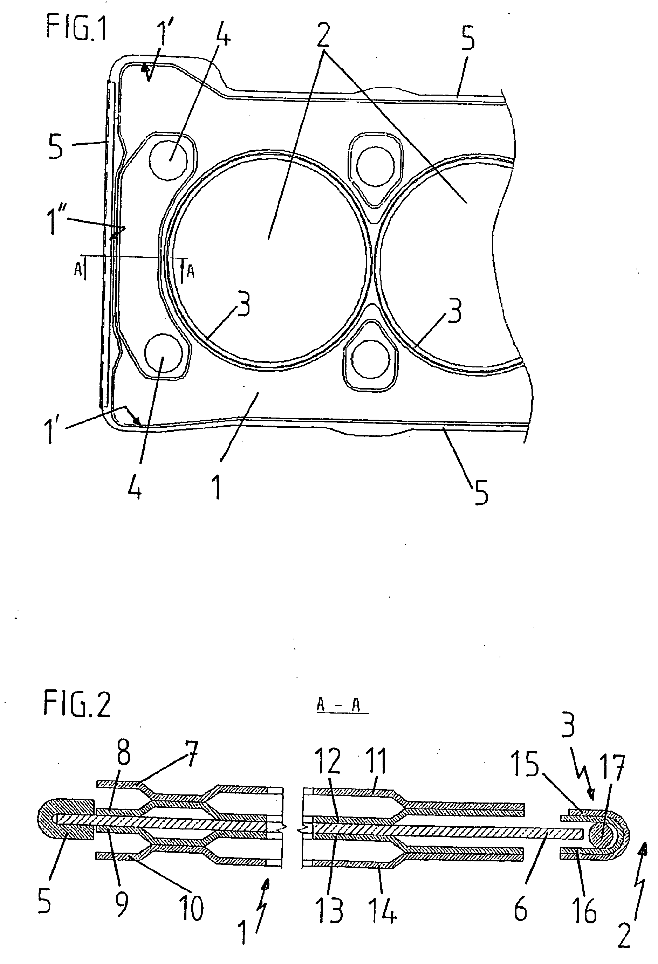

Figur 1 zeigt als Prinzipskizze eine Zylinderkopfdichtung 1, die mit mehreren, dem späteren Brennraum zugewandten Öffnungen 2 versehen ist. Im Bereich der Öffnungen 2 sind Brennraumeinfassungen 3 angeordnet. Ferner sind Durchgangslöcher 4 vorgesehen, die zur Aufnahme von Befestigungselementen dienen. Weitere Durchgangslöcher können zur Führung der flüssigen Medien, im Bereich der Zylinderkopfdichtung 1 vorgesehen werden. In den Randbereichen 1', 1" der Zylinderkopfdichtung 1 sind Begrenzungselemente (Limiter) 5 positioniert.

Figur 2 zeigt einen Schnitt durch die Zylinderkopfdichtung 1 entlang der Linie A-A. Die Zylinderkopfdichtung 1 wird in diesem Beispiel gebildet durch eine aus Blech bestehende Distanzlage 6, sowie vier Funktionslagen 7, 8, 9, 10, die ebenfalls aus Blech bestehen. Die Funktionslagen 7 bis 10 sind mit Halbsicken 11, 12, 13, 14 ausgerüstet. Im Bereich der Öffnungen 2 wird die Distanzlage 6 von einer aus zwei Blechelementen 15, 16 gebildeten Brennraumeinfassung 3 umgeben, wobei das innere Blechelement 16 mit einem Weicheisenring 17 in Wirkverbindung steht. Durch diese Maßnahme wird ein auf den Motor abgestimmter Spalt eingestellt. Im äußeren Randbereich 1"der Distanzlage 6 ist ein Begrenzungselement 5 vorgesehen. Die Funktionslagen 7 bis 10 sind mit vorgebbaren definierten Abständen einerseits zum Begrenzungselement 5 und andererseits zur Brennraumeinfassung 3 mit der Distanzlage 6 verbunden (nicht dargestellt). Die Brennraumeinfassung 3 wird mit dem Weicheisenring 17 um die Distanzlage 6 herum gebördelt, wodurch der auf den Motor abgestimmter Spalt eingestellt wird. Dadurch kann sich die Brennraumeinfassung 3 frei bewegen und ist sowohl von der Distanzlage 6 als auch den Funktionslagen 7 bis 10 entkoppelt. Die durch die Blechelemente 15, 16 gebildete Brennraumeinfassung 3 stellt eine gute Gasabdichtung auch bei Verbrennungskraftmaschinen mit Zylinderlaufbuchsen unterschiedlicher Höhe sicher, während die Halbsicken 11 bis 14 aufweisenden Funktionslagen 7 bis 10 im Bereich der Restfläche zur Medienabdichtung dienen. Die Kraftbalance wird hierbei durch die entsprechende Anzahl der Funktionslagen 7 bis 10 und die Dicke des Begrenzungselementes 5 (Limiter) eingestellt.

## Patentansprüche

1. Mehrlagige Zylinderkopfdichtung mit einer Distanzlage (6), die der Anzahl von Zylinderlaufbuchsen aufnehmenden Brennkammern einer Verbrennungskraftmaschine entsprechende Öffnungen (2) aufweist, wobei die Distanzlage mit mehreren, vorgebbare Abstände sowohl zur jeweiligen Öffnung als auch zum Randbereich aufweisenden, mit Sicken (11-14) versehenen Funktionslagen (7-10) in Wirkverbindung steht, **dadurch gekennzeichnet, dass** im Bereich der Öffnungen (2) zur Gasabdichtung eine Brennraumeinfassung (3) angeordnet ist, die einen Weicheisenring (17) beinhaltet und dass die Brennraumeinfassung (3) relativ zur Distanzlage (6) beweglich und von der Distanzlage (6) sowie den Funktionslagen (7, 8, 9, 10) im Bereich der jeweiligen Öffnung (2) entkoppelt ist und in den Randbereichen (1', 1") zumindest partiell Begrenzungselemente (5) vorgesehen sind.

2. Zylinderkopfdichtung nach Anspruch 1, **dadurch gekennzeichnet, dass** die Funktionslagen (7, 8, 9, 10) mit Halbsicken (11, 12, 13, 14) versehen sind.

3. Zylinderkopfdichtung nach Anspruch 1 oder 2, **dadurch gekennzeichnet, dass** im Bereich einer jeden Stirnfläche der Distanzlage (6) mindestens eine Funktionslage (7, 8, bzw. 9, 10) angeordnet ist.

4. Zylinderkopfdichtung nach einem der Ansprüche 1 bis 3, **dadurch gekennzeichnet, dass** im Bereich einer jeden Stirnfläche der Distanzlage (6) zwei Funktionslagen (7,8, bzw. 9, 10) vorgesehen sind, deren Halbsicken (11, 12, 13, 14) in vorgebbaren Bereichen aneinander liegend und in weiteren vorgebbaren Bereichen mit Abstand zueinander vorgesehen sind.

5. Zylinderkopfdichtung nach einem der Ansprüche 1 bis 4, **dadurch gekennzeichnet, dass** die Halbsicken (11, 12, 13, 14) zu den Begrenzungselementen (5) hin offen ausgebildet sind.

6. Zylinderkopfdichtung nach einem der Ansprüche 1 bis 5, **dadurch gekennzeichnet, dass** die jeweilige Brennraumeinfassung (3) durch zwei Blechelemente (15, 16) gebildet ist, wobei das innere Blechelement (16) den Weicheisenring (17) aufnimmt und beide Blechelemente (15, 16) um die Distanzlage (6) herum gebördelt sind.

7. Zylinderkopfdichtung nach einem der Ansprüche 1 bis 6, **dadurch gekennzeichnet, dass** die Funktionslagen (7, 8, 9, 10) fest mit der Distanzlage (6) verbunden sind.

## Claims

1. Multilayer cylinder head gasket having a spacer layer (6) which has apertures (2) corresponding to the number of combustion chambers receiving cylinder liners in an internal combustion engine, the spacer layer being operatively connected to a plurality of functional layers (7-10) which are provided with beads (11-14) and are at specifiable distances both from the respective aperture and from the edge region, **characterised in that** in the region of the apertures (2) there is arranged, for sealing the gas, a combustion chamber edging (3) which contains a soft iron ring (17) and **in that** the combustion chamber edging (3) is moveable relative to the spacer layer (6) and is separated from the spacer layer (6) and the functional layers (7, 8, 9, 10) in the region of the respective aperture (2), and limiting elements (5) are provided at least partially in the edge regions (1', 1").

2. Cylinder head gasket according to claim 1, **characterised in that** the functional layers (7, 8, 9, 10) are provided with half-beads (11, 12, 13, 14).

3. Cylinder head gasket according to claim 1 or 2, **characterised in that** at least one functional layer (7, 8 or 9, 10) is arranged in the region of each end face of the spacer layer (6).

4. Cylinder head gasket according to one of claims 1 to 3, **characterised in that** in the region of each end face of the spacer layer (6) are provided two functional layers (7, 8 or 9, 10), the half-beads (11, 12, 13, 14) of which are provided in certain specifiable areas lying adjacent to one another and in other specifiable areas at a spacing from one another.

5. Cylinder head gasket according to one of claims 1 to 4, **characterised in that** the half-beads (11, 12, 13, 14) are designed open towards the limiting elements (5).

6. Cylinder head gasket according to one of claims 1 to 5, **characterised in that** the respective combustion chamber edging (3) is formed by two sheet metal elements (15, 16), the inner sheet metal element (16) receiving the soft iron ring (17) and both sheet metal elements (15, 16) being flanged around the spacer layer (6).

7. Cylinder head gasket according to one of claims 1 to 6, **characterised in that** the functional layers (7, 8, 9, 10) are securely connected to the spacer layer (6).

## Revendications

1. Joint de culasse à plusieurs couches avec une couche d'écartement (6) présentant des ouvertures (2) correspondant au nombre de chambres de combustion recevant des chemises de cylindres d'un moteur à combustion interne, la couche d'écartement étant en relation active avec plusieurs couches fonctionnelles (7-10) pourvues de moulures (11-14) et présentant des intervalles prédéterminables tant relativement à l'ouverture correspondante que relativement à la zone de bordure, **caractérisé en ce qu'**un rebord de chambre d'explosion (3) est disposé au niveau des ouvertures (2) pour l'étanchéité aux gaz, lequel comprend une bague en fer doux (17), et **en ce que** le rebord de chambre d'explosion (3) est mobile relativement à la couche d'écartement (6) et découplé de la couche d'écartement (6) ainsi que des couches fonctionnelles (7, 8, 9, 10) au niveau de l'ouverture correspondante (2), et **en ce que** des éléments limiteurs (5) sont prévus au moins partiellement dans les zones de bordure (1', 1").

2. Joint de culasse selon la revendication 1, **caractérisé en ce que** les couches fonctionnelles (7, 8, 9, 10) sont pourvues de demi-moulures (11, 12, 13, 14).

3. Joint de culasse selon la revendication 1 ou 2, **caractérisé en ce qu'**au moins une couche fonctionnelle (7, 8, ou 9, 10) est disposée dans la zone de chaque surface frontale de la couche d'écartement (6).

4. Joint de culasse selon l'une des revendications 1 à 3, **caractérisé en ce que** deux couches fonctionnelles (7, 8, ou 9, 10) sont prévues dans la zone de chaque surface frontale de la couche d'écartement (6), dont les demi-moulures (11, 12, 13, 14) reposent l'une contre l'autre dans des zones prédéterminables, et sont prévues à intervalle l'une de l'autre dans d'autres zones prédéterminables.

5. Joint de culasse selon l'une des revendications 1 à 4, **caractérisé en ce que** les demi-moulures (11, 12, 13, 14) sont ouvertes en direction des éléments limiteurs (5).

6. Joint de culasse selon l'une des revendications 1 à 5, **caractérisé en ce que** chaque rebord de chambre d'explosion (3) est formé par deux éléments en tôle (15, 16), l'élément en tôle intérieur (16) recevant la bague en fer doux (17) et les deux éléments en tôle (15, 16) étant repliés autour de la couche d'écartement (6).

7. Joint de culasse selon l'une des revendications 1 à 6, **caractérisé en ce que** les couches fonctionnelles (7, 8, 9, 10) sont fixement reliées à la couche d'écartement (6).
